# EUROPÄISCHE PATENTANMELDUNG

(11) **EP 1 319 875 A2**
(43) Veröffentlichungstag der Anmeldung: **18.06.2003**
(21) Anmeldenummer: 02014913.4
(22) Anmeldetag: 05.07.2002
(51) Int. Cl.: F16J 15/10, F16J 15/12

(54) **Dichtungsanordnung an zwei einander zugewandten Flächen**

(30) Priorität: 13.12.2001 DE 10161197
(71) Anmelder: Carl Freudenberg KG, 69469 Weinheim (DE)
(72) Erfinder: Kaindl, Ralph, 68526 Ladenburg (DE); Pflästerer, Jens, 69509 Mörlenbach/Weiher (DE); Hofmann, Günther, 68526 Ladenburg (DE); Kreiselmaier, Rainer, 67071 Ludwigshafen (DE)

(57) **Zusammenfassung**

Dichtungsanordnung an zwei einander zugewandten Flächen, wobei zwischen die abzudichtenden Flächen im Dichtungsbereich ein Trägerblatt (1) eingefügt ist, das auf wenigstens einer seiner Oberflächen (2) an vorgegebenen Positionen mit elastischem Dichtungsmaterial versehen ist.

## Beschreibung

In der Technik besteht häufig der Bedarf, zwei zueinander gewandte Flächen abzudichten, sei es um ein zwischen den Flächen strömendes Medium daran zu hindern, nach außen auszutreten oder auch um zu verhindern, dass ungewollt ein Medium von außen in den Raum zwischen den Flächen eintreten kann.
Verschiedene Möglichkeiten von Dichtungsanordnungen sind hier bekannt.

### Stand der Technik

Durch die EP 0 752 078 P1 ist es beispielsweise bekannt, zwischen zwei Flächen einen länglichen Wulst aus einem elastischen Material einzufügen, der von den Flächen zusammengepresst eine Abdichtung ergibt. Der Wulst hat im Querschnitt gesehen eine besondere Form, um zu verhindern, dass der Wulst von der ihn tragenden Fläche beim Pressvorgang abgerissen wird. Der Wulst muß also fest auf einer der beiden Flächen angebracht sein und auf seiner von der Fläche abgewandten Seite eine Form haben, die ein Abreißen des Wulstes von der Fläche verhindert. Diese Form der Ausbildung des Wulstes und auch seine Befestigung an einer der abzudichtenden Flächen ist nur in wenigen begrenzten Fällen anwendbar.

Andere Möglichkeiten, einander zugewandte Flächen abzudichten, zeigt die DE 195 42 475 A1 für die Abdichtung von Verteilerplatten bei elektrochemischen Brennstoffzellen. Dort wird sowohl die Möglichkeit gezeigt, dass in einer Verteilerplatte eine Ausnehmung angebracht wird, in die eine Dichtung eingelegt wird, als auch die weitere Möglichkeit, aus dem Material der Verteilerplatte direkt durch eine Erhebung eine Abdichtung zu erreichen. Beiden Möglichkeiten haftet der Nachteil an, dass beim Zusammenpressen der aus Graphit bestehenden Platten sehr häufig eine Beschädigung der Platten auftritt und dadurch die Brennstoffzelle unbrauchbar wird. Durch die bei der Verpressung aufzubringenden hohen Axialkräfte wird eine relativ hohe Linienpressung an der Kontaktfläche zwischen der Dichtung und der abzudichtenden Fläche erzeugt, so dass mit Ausschuss zu rechnen ist.

### Darstellung der Erfindung

Der Erfindung liegt die Aufgabe zugrunde, eine neue Dichtungsanordnung zu schaffen, die eine sichere Abdichtung der Flächen zueinander ergibt und die einfach hergestellt werden kann. Die Dichtung soll eine möglichst geringe Linienpressung haben.

Die Lösung der gestellten Aufgabe erfolgt erfindungsgemäß dadurch, dass zwischen die abzudichtenden Flächen ein Trägerblatt eingefügt ist, das auf wenigstens einer seiner Oberflächen an vorgegebenen Positionen mit einer Dichtung aus einem elastischen Dichtungsmaterial versehen ist. Durch ein solches Trägerblatt kann eine sehr gute Abdichtung zwischen zwei Flächen erzielt werden. Für die Abdichtung von zwei einander zugewandten Flächen bei einer Brennstoffzelle, bei der die Abdichtung rahmenförmig das Fluidführungssystem einschließt, wird das Trägerblatt ebenfalls rahmenförmig ausgestaltet und im Dichtungsbereich der abzudichtenden Flächen eingelegt. Die häufig aus Graphit bestehenden Basisplatten der Brennstoffzelle müssen weder selbst aus einem elastischen Material sein, noch sind Kanäle zur Aufnahme von Dichtungssträngen erforderlich.

Die Dichtung wird bevorzugt als Wulst auf das Trägerblatt aufgetragen. Um eine möglichst geringe Linienpressung zu erreichen, wird in Fortführung des Erfindungsgedankens ein Teil des Wulstes einschließlich des mit diesem Teil verbundenen Trägerblatts weggeschnitten oder mit anderen Methoden entfernt. Es entsteht dann eine Dichtfläche am Oberteil des Wulstes, die eine erheblich geringere Linienpressung aufweist als Dichtungen mit ebenen Dichtflächen.

Möglich ist auch, den Wulst auf seinem Kammbereich mit einer Nut zu versehen. Hierdurch entstehen gewissermaßen zwei Dichtflächen auf der Oberseite des Wulstes. Eine mögliche Ausführungsform sieht vor, dass die Schnittlinie oder die Nut zickzackförmig oder wellenförmig verlaufen. Die Winkel der zickzackförmigen Schnittlinie oder Nut betragen 10° bis 180°. Dadurch entsteht eine Abdichtlinie, die mit unterschiedlicher Pressung an die Gegenfläche angepresst wird. Die Schnittlinie und auch die Nut haben gleiche, sich wiederholende Abschnitte.

Als Dichtungswerkstoff kann beispielsweise ein Silikon, ein Ethylenpropylen-Dien-Kautschuk oder ein Fluor-Kautschuk benutzt werden.

Als Trägerblatt wird bevorzugt eine Folie eingesetzt. Diese Folie kann beispielsweise auch eine Polymer-Elektrolyt-Membran einer elektrochemischen Brennstoffzelle sein. Die dann abzudichtenden Flächen sind Platten aus Graphit.

Der Dichtungswulst wird mit dem zugehörigen Trägerblatt durch Haftvermittler bei der Vulkanisation oder durch Verkleben verbunden. Eine sehr günstige Möglichkeit für die Auftragung der Dichtungswülste wird dadurch erreicht, dass die Dichtung im Siebdruckverfahren auf das Trägerblatt aufgetragen wird. Hierfür kann die von der Dichtung bedeckte Fläche des Trägerblatts vor dem Aufbringen der Dichtung mit einem Binder beschichtet sein. Dadurch wird eine besonders gute Adhäsionswirkung erzielt.

### Kurzbeschreibung der Zeichnung

In den Zeichnungen sind mehrere Möglichkeiten für die Ausführung der Erfindung dargestellt.
Es zeigt:
- Figur 1: das Trägerblatt mit einem aufgetragenen Wulst im Querschnitt,
- Figur 2: das Trägerblatt mit einem verbliebenen Teil des Wulstes, nachdem ein Teil des Wulstes weggeschnitten ist,
- Figur 3: einen Abschnitt des Trägerblatts mit dem Wulst in der Draufsicht,
- Figur 4: einen weiteren Abschnitt des Trägerblatts mit einem Wulst.

### Ausführung der Erfindung

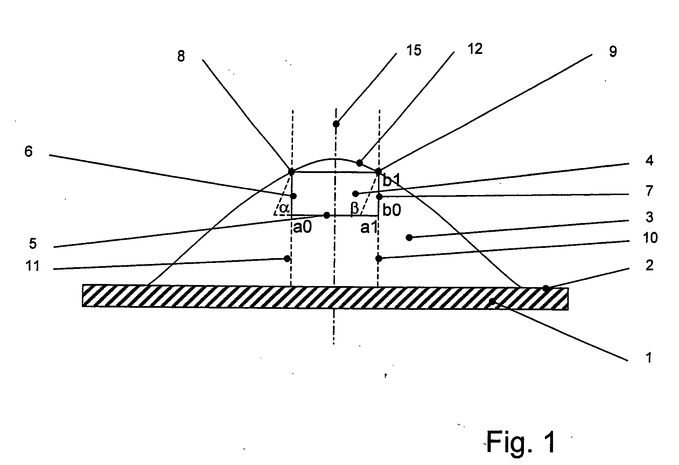

In der Figur 1 ist in erheblich vergrößerter Darstellung im Schnitt das Trägerblatt 1 mit einem auf seiner Oberfläche 2 aufgebrachten Dichtwulst 3 gezeigt. Der Wulst 3 ist aus einem Dichtungsmaterial, im vorliegenden Beispiel aus Silikon-Kautschuk, hergestellt. Als Trägerblatt 1 wird z.B. eine Folie verwendet.

Der Silikon-Kautschuk wird an vorgegebenen Positionen auf die Folie 1 auftragen. Der Auftragsvorgang wird beispielsweise im Siebdruckverfahren durchgeführt. Die von dem Dichtungsmaterial bedeckte Fläche des Trägerblatts 1, die unterhalb des Wulstes 3 liegt, wird bei Bedarf vor dem Aufbringen des Dichtungsmaterials mit einem Binder beschichtet. Auf diese Weise können auf das Trägerblatt 1 beliebige Konfigurationen von Wülsten 3 aufgebracht werden und jede beliebige Dichtung hergestellt werden. Als Trägerblatt 1 kann eine Folie verwendet werden, die sich über die gesamte Fläche, die abzudichten ist, erstreckt. Möglich ist aber auch, die Folie so auszustanzen, dass sie lediglich im Bereich der Wülste erhalten bleibt und alle anderen Teile weggestanzt werden.

Um eine möglichst geringe Linienpressung beim Zusammenpressen des Wulstes 3 zu erreichen, kann der Wulst 3 auf seinem Kammbereich mit der Nut 4 versehen werden. Die Nut 4 wird durch den Nutboden 5 und die Nutseitenwände 6 und 7 gebildet. Die beiden oberen Ränder 8 und 9 an dem Wulst 3 stellen dann sehr gut geeignete Dichtränder dar, mit denen der Wulst 3 an der nicht näher gezeigten abzudichtenden Fläche, die parallel zum Trägerblatt 1 verläuft, zur Anlage kommt. Beim Zusammenpressen der einander zugewandten, abzudichtenden Flächen werden die Nutränder 8 und 9 zusammengedrückt, jedoch mit erheblich geringerem Kraftaufwand, als dies bei einem unbearbeiteten Wulst 3 der Fall ist.

Eine andere Möglichkeit, die Linienpressung herabzusetzen, würde dadurch erreicht, dass ein Teil des Wulstes 3 mitsamt dem darunter befindlichen Trägerblatt 1 weggeschnitten wird. Je nach Einsatzzweck der Dichtung kann die Schnittlinie an die entsprechende Stelle in dem Wulst gelegt werden. So kann der rechts neben der gestrichelten Linie 10 liegende Teil des Wulstes 3 weggeschnitten werden. Es kann aber auch jede andere Schnittlinie gewählt werden entlang der Schnittkanten a₀ - a₁ und b₀ und b₁, die jeweils unter den Winkeln α und β zueinander stehen, beispielsweise auch entlang der gestrichelten Linie 11, je nachdem, welche Dichtkante im oberen Bereich 12 des Wulstes 3 erzielt werden soll.

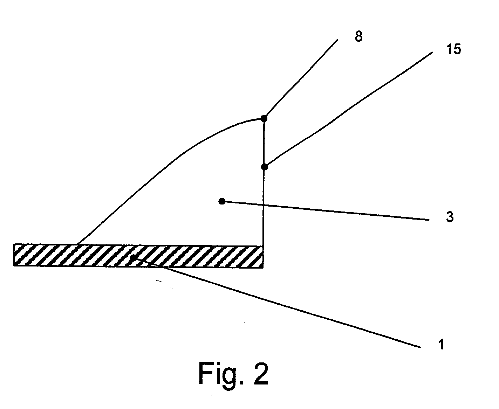

In der Figur 2 ist der nach dem Schnittvorgang verbliebene Teil des Trägerblatts 1 mit dem Wulst 3 gezeigt. In diesem Beispiel ist der Schnitt entlang der Linie 11 geführt worden.

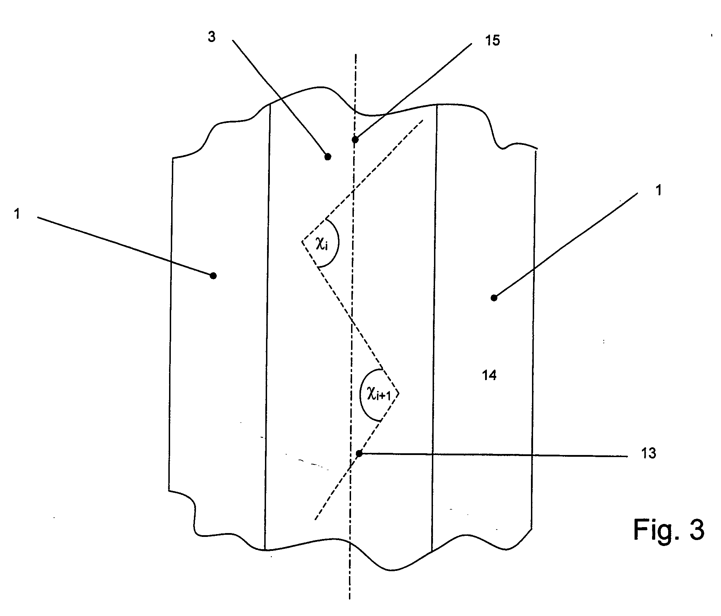

In der Figur 3 ist ein Abschnitt des Wulstes 3 mit dem Trägerblatt 1 in der Draufsicht gezeigt. Gestrichelt ist eine Schnittlinie 13 eingezeichnet, die einen zickzackförmigen Verlauf hat. Der rechts der Schnittlinie 13 liegende Teil 14 des Wulstes mitsamt dem zugehörigen Trägerblatt 1 wird weggeschnitten. Die Schnittlinie 13 kann beliebig in den Wulst eingelegt werden, indem die Winkel γ und γᵢ +1 verändert werden. Die Winkel γ können zwischen 0° und 180° verändert werden. Bei einem Winkel γ von 180° entsteht eine Schnittlinie, die entlang der Mittellinie 15 der Wülste 3 verläuft. Die Schnittlinie 13 wird bevorzugt in einen Bereich der Winkel γ zwischen 120° und 180° gelegt.

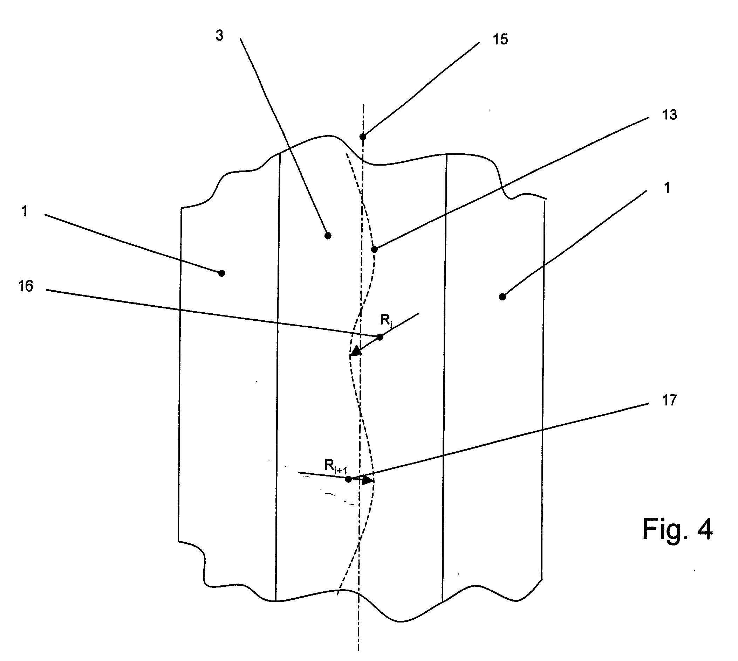

In der Figur 4 ist eine Ausführungsform gezeigt, bei der die Schnittlinie 13 wellenförmig verläuft. Auch hier wird der rechts von der Schnittlinie 13 liegende Teil 14 des Wulstes 3 und des Trägerblatts 1 weggeschnitten. Die Dichtkante läuft dann entlang der Schnittlinie 13. Die Bögen 16 und 17 der Wellen können beliebig gewählt werden.

## Patentansprüche

1. Dichtungsanordnung an zwei einander zugewandten Flächen, **dadurch gekennzeichnet, dass** zwischen die abzudichtenden Flächen im Dichtungsbereich ein Trägerblatt (1) eingefügt ist, das auf wenigstens einer seiner Oberflächen (2) an vorgegebenen Positionen mit elastischem Dichtungsmaterial versehen ist.

2. Dichtungsanordnung an zwei einander zugewandten Flächen nach Anspruch 1, **dadurch gekennzeichnet, dass** das elastomere Material als Wulst (3) auf das Trägerblatt (1) aufgetragen ist.

3. Dichtungsanordnung an zwei einander zugewandten Flächen nach Anspruch 1 oder 2, **dadurch gekennzeichnet, dass** ein Teil (14) des Wulstes (3) einschließlich des mit diesem Teil (14) verbundenen Trägerblatts (1) weggeschnitten ist.

4. Dichtungsanordnung an zwei einander zugewandten Flächen nach Anspruch 1 oder 2, **dadurch gekennzeichnet, dass** der Wulst (3) auf seinem Kammbereich mit einer Nut (4) versehen ist.

5. Dichtungsanordnung an zwei einander zugewandten Flächen nach einem der Ansprüche 1 bis 4, **dadurch gekennzeichnet, dass** die Schnittlinie (10, 11, 13) oder die Nut (4) zickzackförmig oder wellenförmig verläuft.

6. Dichtungsanordnung an zwei einander zugewandten Flächen nach Anspruch 5, **dadurch gekennzeichnet, dass** die Winkel (γ) der zickzackförmigen Schnittlinie (13) oder Nut (4) 10° bis 180° betragen.

7. Dichtungsanordnung an zwei einander zugewandten Flächen nach Anspruch 5 oder 6, **dadurch gekennzeichnet, dass** die Schnittlinie (13) gleiche, sich wiederholende Abschnitte hat.

8. Dichtungsanordnung an zwei einander zugewandten Flächen nach einem der Ansprüche 1 bis 7, **dadurch gekennzeichnet, dass** das Dichtungsmaterial ein Silikon, Ethylenpropylen-Dien-Kautschuk oder ein Fluor-Kautschuk ist.

9. Dichtungsanordnung an zwei einander zugewandten Flächen nach Anspruch 1 oder 2, **dadurch gekennzeichnet, dass** das Trägerblatt (1) eine Folie ist.

10. Dichtungsanordnung an zwei einander zugewandten Flächen nach Anspruch 9, **dadurch gekennzeichnet, dass** die Folie (1) eine Polymer-Elektrolyt-Membran einer elektrochemischen Brennstoffzelle ist.

11. Dichtungsanordnung an zwei einander zugewandten Flächen nach Anspruch 10, **dadurch gekennzeichnet, dass** die abzudichtenden Flächen Verteilerplatten aus Graphit sind.

12. Dichtungsanordnung an zwei einander zugewandten Flächen nach einem der Ansprüche 1 bis 11, **dadurch gekennzeichnet, dass** der Dichtungswulst (3) mit dem zugehörigen Trägerblatt (1) durch Vulkanisation oder Verkleben verbunden ist.

13. Dichtungsanordnung an zwei einander zugewandten Flächen nach einem der Ansprüche 1 bis 11, **dadurch gekennzeichnet, dass** das Dichtungsmaterial im Siebdruckverfahren oder Raupen-Auftragsverfahren auf das Trägerblatt (1) aufgetragen ist.

14. Dichtungsanordnung an zwei einander zugewandten Flächen nach einem der Ansprüche 1 bis 13, **dadurch gekennzeichnet, dass** die von dem Dichtungsmaterial bedeckte Fläche des Trägerblatts (1) vor dem Aufbringen des Dichtungsmaterials mit einem Binder beschichtet ist.
